## Europäisches Patentamt
## European Patent Office
## Office européen des brevets

(19)

(11) Veröffentlichungsnummer: **0 201 068 B1**

# EUROPÄISCHE PATENTSCHRIFT

(12)

(45) Veröffentlichungstag der Patentschrift: **27.03.91**

(51) Int. Cl.5: **H01F 1/06, B22F 9/22, B22F 1/02**

(21) Anmeldenummer: **86106090.3**

(22) Anmeldetag: **03.05.86**

(54) **Verfahren zur Herstellung nadelförmiger, im wesentlichen aus Eisen bestehender ferromagnetischer Metallteilchen.**

(30) Priorität: **10.05.85 DE 3516884**

(43) Veröffentlichungstag der Anmeldung:
**17.12.86 Patentblatt 86/46**

(45) Bekanntmachung des Hinweises auf die
Patenterteilung:
**27.03.91 Patentblatt 91/13**

(84) Benannte Vertragsstaaten:
**DE FR GB NL**

(56) Entgegenhaltungen:
**EP-A- 0 015 485**
**US-A- 4 305 753**

(73) Patentinhaber: **BASF Aktiengesellschaft**
**Carl-Bosch-Strasse 38**
**W-6700 Ludwigshafen(DE)**

(72) Erfinder: **Schwab, Ekkehard, Dr.**
**Maxburgstrasse 1**
**W-6730 Neustadt(DE)**
Erfinder: **Steck, Werner, Dr.**
**Auerstrasse 4**
**W-6700 Ludwigshafen(DE)**
Erfinder: **Rudolf, Peter, Dr.**
**Nibelungenweg 14**
**W-6701 Maxdorf(DE)**
Erfinder: **Vaeth, Guenter**
**Woogstrasse 35**
**W-6703 Limburgerhof(DE)**
Erfinder: **Jakusch, Helmut, Dr.**
**Lorscher Ring 6 c**
**W-6710 Frankenthal(DE)**
Erfinder: **Kovacs, Jenoe, Dr.**
**Kantstrasse 9**
**W-6717 Hessheim(DE)**

EP 0 201 068 B1

**Beschreibung**

Die Erfindung betrifft ein Verfahren zur Herstellung von Phosphationen und gegebenenfalls weitere Zusatzstoffe enthaltenden nadelförmigen, im wesentlichen aus Eisen bestehenden ferromagnetischen Metallteilchen sowie deren Verwendung zur Herstellung von magnetischen Aufzeichnungsträgern.

Ferromagnetische Metallpulver sind wegen ihrer hohen Sättigungsmagnetisierung und der bei formanisotropen Teilchen daher möglichen hohen Koerzitivfeldstärken von besonderem Interesse für die Herstellung von magnetischen Aufzeichnungsträgern, da sich auf diese Weise das Energieprodukt und die Informationsdichte erheblich steigern lassen und solche Informationsträger schmälere Signalbreiten und bessere Signalamplituden ergeben.

Es ist bekannt, Eisenteilchen durch Reduktion feinverteilter nadelförmiger Eisenverbindungen, wie z.B. der Oxide oder Oxidhydroxide, mit Wasserstoff oder einem anderen gasförmigen Reduktionsmittel herzustellen. Bevorzugt werden hierfür nadelförmige Eisen(III)oxidhydroxide herangezogen, aus denen durch Temperung und Reduktion sowie anschließende Passivierung die entsprechenden Metallteilchen hergestellt werden.

Zur Herstellung von nadelförmigem Eisenoxidhydroxid ist in der Literatur das sogenannte saure Verfahren angegeben. Bei diesem zweistufigen Prozeß wird aus einer Fe(II)-Salzlösung zunächst ein Teil der Fe(II)Ionen in Form von $Fe(OH)_2$ ausgefällt und dieses zu FeOOH-Keimen oxidiert. In einem zweiten Schritt wächst durch weitere Oxidation von Fe(II)-Ionen bei einem pH-Wert von unter 7,0 FeOOH auf die genannten Keime auf. Das saure Verfahren zur Herstellung der geeigneten $\alpha$- bzw. $\gamma$-Modifikation des FeOOH ist u.a. in der US-PS 26 94 656 bzw. der DE-AS 10 61 760 beschrieben. Darüber hinaus sind eine Reihe von Varianten veröffentlicht, bei denen das Eisenoxidhydroxid-Pigment mit Fremdionen dotiert wird. Neben Übergangsmetall-Kationen wie z.B. Zn (DE-AS 13 00 861) können auch Anionen und vor allem auch solche, die Elemente der V. Hauptgruppe enthalten, den Syntheseverlauf bzw. die Produkteigenschaften beeinflussen. In der DE-AS 11 76 111 wird vorgeschlagen, zu Beginn der Fe(II)-Oxidation in der Keimbildungsphase $PO_4^{3-}$-Ionen vorzulegen. Danach wird $\alpha$-FeOOH mit einer gedrungenen Nadelform zugänglich. Die Zugabe von $PO_4^{3-}$-Ionen bei der $\gamma$-FeOOH-Synthese führt gemäß DE-AS 12 19 009 zu überwiegend isometrischen Teilchen, die daher für die Herstellung hochwertiger nadelförmiger magnetischer Materialien ungeeignet sind. In der DE-AS 12 25 157 wird dieses Verfahren kombiniert mit der Zugabe von Phosphationen nach der Keimbildung oder während des Wachstumsschritts. Auch Zusätze von Arsenaten zur Beeinflussung der Nadelgeometrie wurden schon vorgeschlagen (DE-AS 12 23 352).

Auch hinsichtlich der weiteren Verfahrensschritte zur Herstellung der Metallteilchen durch Entwässerung und Temperung der Eisenoxidhydroxide sowie der Reduktion der dabei resultierenden Eisenoxide sind eine Reihe von Modifikationen beschrieben worden.

So wird die äußere Form der gewünschten Metallteilchen bereits durch die Geometrie der als Ausgangsmaterialien eingesetzten Eisenoxidhydroxide stark vorgeprägt. Um darüber hinaus die während der Umwandlungsschritte Temperung und Reduktion temperaturbedingten Sintervorgänge weitgehend zu unterdrücken, werden formstabilisierende Überzüge auf die Eisenoxid-hydroxid-Teilchen aufgebracht. Hierzu sind bereits eine Reihe von Stoffen beschrieben worden, u.a. gemäß der DE-OS 26 46 348 die Verwendung von hydrolysebeständigen Sauerstoffsäuren des Phosphors, deren Salze oder deren Ester und aliphatische ein- oder mehrbasische Carbonsäuren; der Einsatz von Zinnverbindungen gemäß der DE-PS 19 07 691, von Silicaten gemäß den JA-OSen 51-39 027 und 51-70 231 oder auch kolloidalem Siliciumdioxid gemäß der US-PS 4 280 918. Auch bei der Temperung der Eisenoxid-hydroxide d.h. ihrer Entwässerung zum $\alpha$-$Fe_2O_3$ wurde eine Beeinflussung der Eigenschaften des Endprodukts versucht. So beschreibt die EP-A-24 692 die Temperung in einer wasserdampfhaltigen Atmosphäre vor.

Für die Reduktion sind ebenfalls verschiedene Verfahren beschrieben worden. Die DE-OS 32 28 669 beschreibt die stufenweise Reduktion der oxidischen Materialien. Im ersten Schritt wird die Zersetzung einer zuvor auf die Oxide aufgebrachten organischen Substanz in einer Inertgas-Atmosphäre für eine Teilreduktion benutzt und in einem zweiten Schritt wird das vorreduzierte Material mit Wasserstoff endgültig zum Metall reduziert. Andere Verfahren verwenden ausschließlich Wasserstoff für die Reduktion, wobei verschiedentlich vorgeschlagen worden ist, reaktionsbeschleunigende Stoffe auf die Oxide aufzubringen, um die Reduktion bei niedrigeren Temperaturen durchführen zu können. So offenbart die DE-OS 20 14 500 das Aufbringen von Silber oder Silberverbindungen zu diesem Zweck. Ebenso ist die Behandlung des Eisenoxids mit Zinn(II)chlorid beschrieben worden (DE-OS 19 07 691).

Die vielfältigen und auch unterschiedlichen Versuche zur Herstellung von ferromagnetischen, im wesentlichen aus Eisen bestehenden Metallteilchen zeigen, daß die Anforderungen an das als magnetisches Material für magnetische Aufzeichnungsschichten eingesetzte Produkt meist sehr hoch sind. Gerade da die entsprechenden Metallteilchen wegen ihrer gegenüber den oxidischen Werkstoffen hervorragenden magne-

2

tischen Eigenschaften sich zur Verwendung für Aufzeichnungsträger mit hoher Aufzeichnungsdichte anbieten, müssen eine Reihe der die mechanischen und Aufzeichnungs-Eigenschaften beeinflussenden Produktparameter ebenfalls besonderen Anforderungen genügen. So ist es u.a. wesentlich, daß das magnetische Material eine hohe Feinteiligkeit aufweist, damit die bei magnetischen Aufzeichnungsträger für Videosignale wichtige glatte Oberfläche der Magnetschicht möglich wird und sich günstige Rauschwerte erzielen lassen. Die Werte für die je nach Anwendungsfall wichtigen Rausch- bzw. Störabstandseigenschaften lassen sich aber weitgehend erst nach Einarbeiten des magnetischen Materials in eine entsprechende Magnetschicht feststellen.

Aufgabe der vorliegenden Erfindung war es daher, ein Verfahren zur Herstellung von nadelförmigen, im wesentlichen aus Eisen bestehenden ferromagnetischen Metallteilchen bereitzustellen, welches in einfacher Weise ermöglicht, solche Metallteilchen zu erhalten, die einerseits die aufzeichnungstechnisch erforderlichen magnetischen Eigenschaften, wie beispielsweise eine Koerzitivfeldstärke zwischen 60 und 80 kA/m, aufweisen und andererseits nach Einarbeitung in eine Magnetschicht bei der Videoaufzeichnung hohe Luminanz-Störabstandswerte ermöglichen.

Es wurde nun überraschenderweise gefunden, daß sich nadelförmige, im wesentlichen aus Eisen bestehende ferromagnetische Metallteilchen mit den aufgabengemäß geforderten Eigenschaften durch Reduktion von einem durch Entwässern aus nadelförmigem, mit einem formstabilisierenden Oberflächenüberzug versehenen Eisen(III)oxidhydroxid erhaltenen $\alpha$-Eisen(III)oxid herstellen lassen, wenn nach dem sauren Verfahren in einer ersten Stufe aus Eisen(II)salzlösungen durch Zugabe von Alkalien unter gleichzeitiger Oxidation mittels Einleiten von Luft $\gamma$-FeOOH-Keime in Gegenwart von, bezogen auf die Menge an $\gamma$-FeOOH-Endprodukt, 0,5 bis 1,5 Gew.% Phosphationen erzeugt werden, diese Keime dann in einer zweiten Stufe bei einem pH-Wert der Reaktionssuspension zwischen 4,0 und 5,5 zum $\gamma$-FeOOH-Endprodukt weiterwachsen und anschließend die $\gamma$-FeOOH-Teilchen in der Reaktionssuspension mit einer aus Silicium- und/oder Zinnoxide bestehenden Oberflächenausrüstung versehen werden, um nach dem Abtrennen bei Temperaturen zwischen 350 und 600°C zum $\alpha$-Eisen(III)oxid entwässert und getempert und in einer reduzierenden Atmosphäre bei einer Temperatur zwischen 300 und 450°C zum Metall reduziert zu werden.

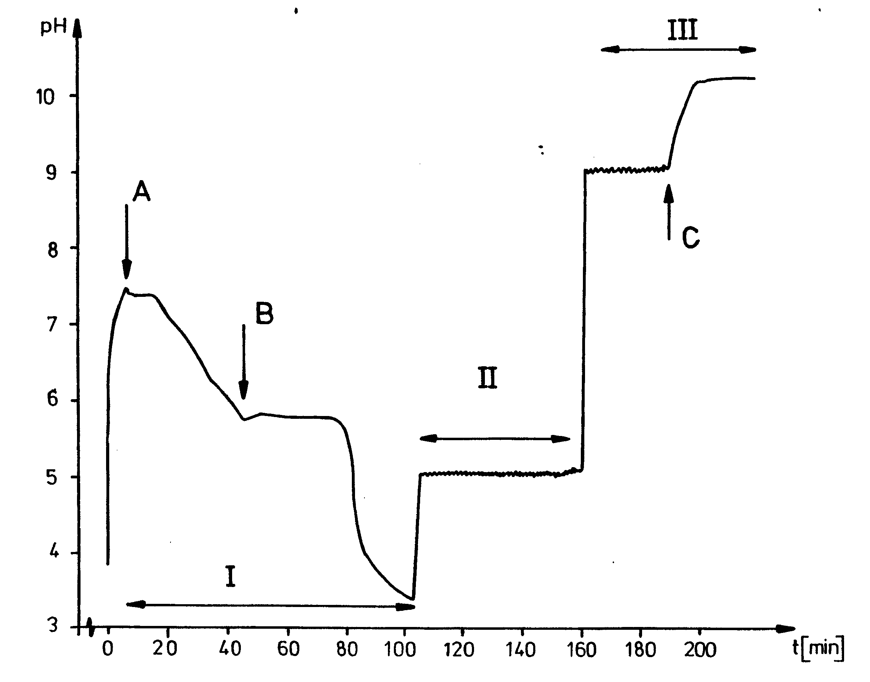

Nach dem Verfahren der Erfindung wird das $\gamma$-FeOOH (Lepidokrokit) aus Eisen(II)salzlösungen mit Alkalien unter gleichzeitiger Oxidation nach der sauren Synthese hergestellt. Als besonders zweckmäßig hat es sich erwiesen, aus einer wäßrigen Eisen(II)chloridlösung mittels Alkalien wie Alkalihydroxid oder Ammoniak bei Temperaturen zwischen 10 und 36°C bei Lufteinteilung und kräftigem Rühren zur Erzeugung feiner Luftblasen Eisen(III)oxidhydrat-Keime bis zu einer Menge von 25 bis 60 Mol.% des eingesetzten Eisens zu bilden. Die Zugabe der Phosphationen in Form von ortho-Phosphorsäure und/oder deren primären und/oder sekundären und/oder tertiären Alkali- oder Ammoniumsalzen erfolgt zweckmäßigerweise vor der Fe(OH)$_2$-Fällung, spätestens aber wenn nach Oxidationsbeginn der charakteristische Knickpunkt B im pH-Wert/Zeit-Diagramm (s. Abb. 1) erreicht wird. Die Phosphationen werden in Mengen von 0,5 bis 1,5 Gew.%, bezogen auf $\gamma$-FeOOH-Endprodukt zugesetzt, bevorzugt in einer Menge von 0,75 bis 1,0 Gew.%. Aus den Keimen entsteht anschließend bei einer Temperatur zwischen 20 und 70°C und bei einem durch Zusatz weiterer Alkalimengen eingestellten pH-Wert von 4,0 bis 5,5 unter intensiver Luftverteilung durch Zuwachs das Endprodukt. Nach beendetem Wachstum soll der Feststoffgehalt an Eisen(III)oxidhydroxid in der wäßrigen Suspension zwischen 10 und 65 g/l liegen.

Diese Lepidokrokit-Teilchen werden dann in der Reaktionssuspension bei pH-Werten zwischen 8 und 10,5 mit 1 bis 3 Gew.%, bevorzugt 1,5 Gew.% Silicium in Form von Wasserglas gemäß US-PS 4 133 677 und/oder mit 1 bis 3 Gew.%, bevorzugt 1,5 Gew.% Zinn gemäß DE-PS 19 07 691 formstabilisierend ausgerüstet. Nach Abtrennen von der Mutterlauge und Trocknen der so erhaltenen $\gamma$-FeOOH-Teilchen erfolgt bei Temperaturen von 350 bis 600°C unter Intergasatmosphäre die Entwässerung zu $\alpha$-Fe$_2$O$_3$, welches danach in an sich bekannter Weise bei Temperaturen von 300 bis 450°C mit Wasserstoff zum Metall reduziert wird. Es empfiehlt sich, die so erhaltenen feinteiligen Metallpulver durch Überleiten eines Luft- oder Sauerstoff/Inertgas-Gemisches zu passivieren, um den pyrophoren Charakter der Teilchen zu mindern.

Bei der Ausarbeitung des erfindungsgemäßen Verfahrens hat es sich gegebenenfalls als zweckmäßig herausgestellt, das oberflächlich ausgerüstete $\alpha$-Eisen(III)oxid mittels zersetzlicher organischer Verbindungen zunächst zu FeO$_x$ mit Werten für x zwischen größer/gleich 1,33 und kleiner/gleich 1,40 bei Temperaturen zwischen 270 und 650°C unter Inertgasatmosphäre vorzureduzieren und dann anschließend mittels eines reduzierenden Gases, wie z.B. Wasserstoff und/oder Kohlenmonoxid, in die Metallform zu überführen.

Die erfindungsgemäß hergestellten Metallteilchen eignen sich in hervorragender Weise als magnetisches Material für magnetische Aufzeichnungsträger, insbesondere für die Speicherung von Videosignalen, aber auch für Audio- und Datenmedien. Die Herstellung der Speichermedien geschieht in an sich bekannter Weise. Hierzu wird das Metallpulver zusammen mit den üblichen Zusatzstoffen wie Dispergierhilfsmitteln,

3

Natrium- oder Zinkoleat, Natriumlaureat, -palmitat, -stearat, sowie gegebenenfalls nichtmagnetischen Füllstoffen, wie Quarzmehl, Pulver auf Silikatbasis, Aluminium-oder Zirkonoxid und den in organischen Lösungsmittel gelösten Bindemitteln, wie z.B. elastomere Polyurethane, Epoxyharz, Vinylchlorid/-Vinylacetat-Copolymere, mit Isocyanaten vernetzte OH-Gruppen-haltige Polyurethane sowie Mischungen davon, in einer Dispergiereinrichtung, wie einer Topf- oder Rührwerksmühle, zu einer Dispersion verarbeitet. Die Magnetdispersion wird anschließend mit Hilfe üblicher Beschichtungsmaschinen auf den nichtmagnetischen Träger aufgebracht. Als nichtmagnetische Träger lassen sich die üblichen Trägermaterialien verwenden, insbesondere Folien aus linearen Polyestern wie Polyethylenterephthalat, im allgemeinen in Stärken von 4 bis 20 μm. Bevor die noch flüssige Beschichtungsmischung auf dem Träger getrocknet wird, werden die anisotropen Magnetteilchen durch die Einwirkung eines Magnetfeldes entlang der vorgesehenen Aufzeichnungsrichtung orientiert. Anschließend werden die Magnetschichten durch Hindurchführen zwischen geheizten und polierten Walzen geglättet und verdichtet. Die Dicke der Magnetschicht beträgt im allgemeinen 2 bis 6 μm.

Anhand der folgenden Beispiele wird das erfindungsgemäße Verfahren dargestellt und durch Vergleichversuche der erreichbare technische Fortschritt aufgezeigt.

Zur Charakterisierung des als Ausgangsmaterial hergestellten Eisen(III)oxidhydroxid diente in erster Linie die nach BET bestimmte Stickstoff-Oberfläche $S_{N_2}$.

Die magnetischen Werte des Eisenpulvers wurden mit einem Schwingmagnetometer bei einem maximalen magnetischen Feld von 160 kA/m nach Vormagnetisierung in einem Impulsmagnetisierer gemessen. Die Werte der Koerzitivfeldstärke, gemessen in kA/m, wurden bei den Pulvermessungen auf eine Stopfdichte von $\rho$ = 1,6 g/cm³ bezogen. Die spezifische Remanenz $M_r/\rho$ ist in nTm³/g angegeben.

Das Aufzeichnungsverhalten der mit den einzelnen Pigmenten hergestellten magnetischen Aufzeichnungsträger wurde im Video-Bereich durch Messungen am Schleifenlaufwerk erfaßt. Es wurde ein Meßaufbau mit feststehenden Videoköpfen und einer rotierenden Endlos-Magnetbandschleife verwendet, mit der ein gleichzeitiges Aufsprechen und Wiedergeben möglich ist. Die Messungen sind auf ein Referenzband bezogen.

Als Meßgrößen zur Charakterisierung der einzelnen Bänder dienten das Luminanz-Signal/Rausch-Verhältnis (HF-S/N) : Trägerpegel bei 4,5 MHz zu Rauschpegel bei 3,5 MHz, gemessen mit 30 kHz Bandbreite, sowie das Chrominanz-Signal/Rausch Verhältnis (CR-S/N) : Farbträgerpegel bei 0,75 MHz zu Rauschpegel bei 0,65 MHz, gemessen mit 30 kHz Bandbreite. Die Größen werden aus Frequenzgangkurven entnommen, die erhalten werden, indem eine Trägerfrequenz von 5 MHz, welche bei kleinem Modulationsindex so in der Phase moduliert ist, daß sich zwei gleiche Seitenbänder konstanter spektraler Signaldichte (insgesamt von 0 bis 10 MHz) ergeben, im optimalen Arbeitspunkt des Bandes aufgezeichnet wird.

Bei der Messung beträgt die Band/Kopf-Relativgeschwindigkeit 4,75 m/s, zur Wiedergabe wird ein Ferrit-, zum Schreiben ein Sendust-Kopf verwendet.

Beispiel 1

In einem 10 l Glasgefäß mit Rührer, Temperatur- und pH-Regelung und Gaseinleitungsvorrichtung für Stickstoff und Luft werden 1,34 l einer technischen Eisen(II)chlorid-Lösung ($\rho$ = 1,352 g/cm³) vorgelegt und mit Wasser auf 6 l Gesamtvolumen aufgefüllt. Zu dieser Lösung werden 4,8 g NaH₂PO₄ . 2 H₂O gegeben ( = 0,75 % PO₄³⁻ bezogen auf die theoretische Ausbeute FeOOH). Danach betrug der pH der Lösung 1,7. Unter Durchleiten von 300 l N₂/h wurde der Ansatz auf 20°C thermostatisiert. Anschließend wurden mit einer Schlauchpumpe 1010 ml einer 15 gew.%igen NaOH zugepumpt, entsprechend einem Ausfällgrad von 50 % Fe(II). Die Temperatur der Suspension stieg dabei leicht an. Nachdem die Lösung wieder auf 20°C abgekühlt war, wurde auf 600 Liter Luft/h umgestellt, wobei die Reaktionstemperatur weiterhin auf 20°C gehalten wurde. Nach 86 Minuten war die Keimbildung abgeschlossen, die Suspension wies einen pH von 3,4 auf. Nun wurde unter Beibehaltung der übrigen Reaktionsbedingungen von 20 auf 32°C erwärmt und durch Zudosierung einer wäßrigen 15 %igen NaOH mittels automatischer pH-Regelung bei einem pH von 5,1 innerhalb von 245 Minuten der Aufwachsprozeß durchgeführt. Daran anschließend wurden der pH der Lösung durch Zudosieren von NaOH auf 9,0 erhöht und die γ-FeOOH-Teilchen durch Zugabe von 54,5 g Wasserglas in 250 ml H₂O mit einer formstabilisierenden Ausrüstung versehen. Der pH steigt dabei auf 10,2 am Ende der Synthese. Die γ-FeOOH-Suspension wurde über eine Nutsche abgesaugt und durch mehrmaliges Aufschlämmen in Wasser chloridfrei gewaschen. Der Filterkuchen wurde bei 110°C im Vakuumtrockenschrank getrocknet.

Das erhaltene γ-FeOOH wurde im Drehkolben im Stickstoffstrom (60 Nl/h) bei 500°C während 30

Minuten zu $\alpha$-Fe$_2$O$_3$ getempert und anschließend im kontinuierlichen Drehrohrofen bei 360°C und einer Verweilzeit von 8 h mit 220 Nl/h Wasserstoff, der im Gegenstrom zum Feststoff geführt wurde, zum Metall reduziert. Das erhaltene Metallpulver wurde schließlich mit einem Luft/-Stickstoff-Gemisch passiviert (30 l N$_2$/5 l Luft/h).

Die Meßergebnisse sind in der Tabelle 1 angegeben.


Beispiel 2

Es wurde wie in Beispiel 1 beschrieben verfahren, jedoch mit dem Unterschied, daß die Vorlage mit 6,4 g NaH$_2$PO$_4$ . 2 H$_2$O versetzt wurde (= 1,0 Gew.% PO$_4^{3-}$ bezogen auf theoretische Ausbeute $\gamma$-FeOOH). Die Dauer der Keimphase war 67 Minuten, die Dauer der Aufwachsphase 56 Minuten. Den Reaktionsverlauf wiedergegeben in einem pH/Zeit-Diagramm zeigt Abbildung 1. An die Keimbildungsphase I schließt sich die Wachstumsphase II und die Oberflächenausrüstung III an. Nach der Bereitung der Vorlage wurde bei A mit der Lufteinleitung begonnen. Der Knickpunkt B kennzeichnet den Moment vor dem die Phosphationenzugabe erfolgt sein muß und bei C fand die formstabilisierende Ausrüstung der $\gamma$-FeOOH-Teilchen durch Zugabe von Wasserglas statt. Die Umwandlung zum Metallpulver erfolgte wie in Beispiel 1 beschrieben. Die Meßergebnisse sind in Tabelle 1 angegeben.


Beispiel 3

In einem 250 l-Kessel mit Rührer, Temperatur- und pH-Regelung und Gaseinleitungs-Einrichtung für Stickstoff und Luft wurden 23,7 l einer technischen Eisen(II)chlorid-Lösung (428 g FeCl$_2$ je Liter) und 85 l Wasser vorgelegt, wonach der pH der Lösung bei 2,5 lag. Die Lösung wurde mit 1000 l N$_2$/Stunde begast und auf 20°C thermostatisiert. Nach Erreichen der Soll-Temperatur wurden innerhalb von 10 min 18,4 l 15 %ige NaOH zugepumpt, entsprechend einem Ausfällgrad von 50 %. Unmittelbar nach der Fällung wurden 87,5 g NaH$_2$PO$_4$ . 2 H$_2$O, gelöst in 1 l Wasser, zugegeben (0,75 % PO$_4^{3-}$, bezogen auf die theoretische Ausbeute $\gamma$-FeOOH). Daran anschließend wurde der Stickstoffstrom durch 3700 l Luft/h ersetzt, wobei die Reaktionstemperatur weiterhin auf 20°C gehalten wurde. Nach 60 min war die Keimbildung abgeschlossen, die Suspension wies einen pH von 3,4 auf. Nun wurde unter Beibehaltung der übrigen Bedingungen von 20 auf 32°C aufgeheizt und durch Zudosierung von 15 %iger NaOH mittels automatischer pH-Regelung bei einem pH von 5.1 innerhalb von 127 min der Wachstumsprozeß durchgeführt. Daran anschließend wurden durch Zupumpen von 3 l 15 %iger NaOH der pH der Lösung auf 9,0 gestellt und die $\gamma$-FeOOH-Teilchen durch Zugabe von 880 g Wasserglas, gelöst in 2 l Wasser, mit einer SiO$_2$-Schicht überzogen. Der pH der Lösung betrug danach 9.6. Über eine Drucknutsche wurde die Suspension abgesaugt und 5 mal mit warmem Wasser gewaschen, bis das Filtrat chloridfrei war. Das Produkt wurde im Vakuumtrockenschrank bei 110°C getrocknet.

Das erhaltene $\gamma$-FeOOH wurde im Stickstoffstrom bei 500°C und einer Verweilzeit von 90 min zu $\alpha$-Fe$_2$O$_3$ getempert und anschließend im kontinuier-gewaschen, bis das Filtrat chloridfrei war. Das Produkt wurde im Vakuumtrockenschrank bei 110°C getrocknet.

Das erhaltene $\gamma$-FeOOH wurde im Stickstoffstrom bei 500°C und einer Verweilzeit von 90 min zu $\alpha$-Fe$_2$O$_3$ getempert und anschließend im kontinuierlichen Drehrohrofen bei 380°C und einer Verweilzeit von 7 h mit 3,5 Nm$^3$/h Wasserstoff, der im Gegenstrom zum Feststoff geführt wurde, zum Metall reduziert. Das erhaltene Metallpulver wurde schließlich mit einem Luft/Stickstoff-Gemisch passiviert. Die Meßergebnisse sind in Tabelle 1 angegeben.


Beispiel 4

Es wurde wie in Beispiel 3 beschrieben verfahren, jedoch mit dem Unterschied, daß die Zugabe des Phosphats vor der Ausfällung des Fe(OH)$_2$ erfolgte. Das erhaltene $\gamma$-FeOOH wurde im kontinuierlichen Drehrohr im Stickstoffstrom bei 550°C und einer Verweilzeit von 90 Minuten zu $\alpha$-Fe$_2$O$_3$ getempert und anschließend im kontinuierlichen Drehrohrofen bei 375°C und einer Verweilzeit von 7 Stunden zum Metall reduziert. Das erhaltene Metallpulver wurde wieder mit einem Luft/Stickstoff-Gemisch passiviert. Die Meßergebnisse sind in Tabelle 1 angegeben.

Beispiel 5

Es wurde wie in Beispiel 4 beschrieben verfahren, jedoch mit dem Unterschied, das 116,7 g $NaH_2PO_4$ x 2 $H_2O$ (1,0 Gew.% $PO_4^{3-}$, bezogen auf die theoretische Ausbeute $\gamma$-FeOOH) zugegeben wurde. Die Ausrüstung des $\gamma$-FeOOH nach Abschluß der Wachstumsphase wurde wie folgt vorgenommen: Die Suspension wurde mit 15 %iger NaOH auf pH 9 gestellt. Anschließend wurden 1001 g $NiSO_4$ x 6 $H_2O$, gelöst in 3 l Wasser zugegeben, wobei der pH-Wert durch Zupumpen weiterer Natronlauge bei 9 gehalten wurde. Anschließend wurde 30 min nachgerührt und danach 1201 g Wasserglas, gelöst in ca. 4 l Wasser zulaufen lassen. Der pH der Suspension stieg dabei auf 10.1. Es wurde wieder 30 in nachgerührt und danach 200 ml Olivenöl zugegeben. Nach weiteren 30 min Nachrühren wurde die fertige Suspension auf eine Drucknutsche gegeben und wie im Beispiel 3 aufgearbeitet. Das erhaltne $\gamma$-FeOOH wurde diskontinuierlich im Drehkolben unter Stickstoff bei 380 °C zu $FeO_x$ vorreduziert und anschließend im kontinuierlichen Drehrohr wie im Beispiel 3 beschrieben zu Metall reduziert und nachfolgend passiviert. Die Meßergebnisse sind in Tabelle 1 angegeben.

Beispiel 6

In einem 10 l-Glasgefäß mit Rührer, Temperatur- und pH-Regelung und Gaseinleitungsvorrichtung für Luft und Stickstoff wurden 1,43 l einer technischen Eisen(II)chloridlösung (Dichte = 1.328 g/ml) sowie 2,01 ml einer 85 %igen Phosphorsäure (= 0,75 % $PO_4^{3-}$) vorgelegt und mit Wasser auf 6 l aufgefüllt. Der pH-Wert der Lösung betrug danach 1,44. Unter Durchleiten von 200 l $N_2$/h wurde die Lösung auf 20 °C thermostatisiert. Anschließend wurden durch Zupumpen von 1000 ml einer 15,1 %igen NaOH 50 % der Fe-(II)-Ionen als $Fe(OH)_2$ ausgefällt. Danach wurde auf 600 l Luft/h umgestellt, wobei die Reaktionstemperatur auf 20 °C gehalten wurde. Nach 75 Minuten war die Keimbildung abgeschlossen, die Suspension wies einen pH-Wert von unter 4 auf. Nun wurde unter Beibehaltung der übrigen Reaktionsbedingungen von 20 °C auf 32 °C erwärmt und durch Zudosierung einer wäßrigen 15,1 %igen NaOH mittels automatischer pH-Regelung bei einem pH von 5.1 innerhalb von 210 Minuten der Wachstumsprozeß durchgeführt. Daran anschließend wurde die Suspension mit 11,82 g $SnCl_2$ . 2 $H_2O$, gelöst in 5 ml konz. HCl, welche auf 100 ml mit Wasser aufgefüllt wurden, versetzt. Der pH-Wert der Lösung betrug danach 1,6. Mlt 15,1 %iger NaOH wurde die Lösung wieder auf pH = 7 gestellt und mit 10 ml Olivenöl versetzt.

Die fertige Suspension wurde über eine Nutsche abgesaugt und durch mehrmaliges Aufschlämmen in Wasser chloridfrei gewaschen. Der Filterkuchen wurde bei 100 °C im Vakuumtrockenschrank getrocknet. Das ausgerüstete $\gamma$-FeOOH wurde unter Zersetzung der organischen Komponente durch Tempern im Stickstoffstrom im Drehkolben bei 380 °C während 30 Minuten zu $FeO_x$ vorreduziert und anschließend im kontinuierlichen Drehrohr im Wasserstoffstrom bei 300 °C und einer Verweilzeit von 8 h zum Metall reduziert. Das pyrophore Metallpulver wurde wieder mit einem $N_2$/Luft-Gemisch passiviert. Die Meßergebnisse sind in Tabelle 1 angegeben.

Beispiel 7

Es wurde wie in Beispiel 5 beschrieben verfahren, jedoch mit dem Unterschied, daß 2,68 ml 85 %ige Phosphorsäure in die Vorlage gegeben wurden (= 1,0 % $PO_4^{3-}$ bezogen auf $\gamma$-FeOOH). Die Umwandlungsbedingungen von $\gamma$-FeOOH zum Metallpigment entsprachen ebenfalls den in Beispiel 5 beschriebenen. Die Meßergebnisse sind in Tabelle 1 angegeben.

Beispiel 8

In einem Kessel mit 51 $m^3$ Nutzvolumen, versehen mit Rührer, Temperatur-und pH-Regelung und Lufteinleitung, wurden 24 $m^3$ Wasser, 6,95 $m^3$ 30,65 %ige Eisen(II)chlorid-Lösung und 12,1 kg 62 %ige Phosphorsäure (= 0,5 % $PO_4^{3-}$) vorgelegt. Unter Rühren wurden innerhalb von 30 Minuten bei einer Temperatur von 20 bis 22 °C 5,4 $m^3$ NaOH (15 %ig) zugefahren und anschließend 2700 $Nm^3$ Luft/h eingeleitet. Nach 300 Minuten war die Keimbildung beendet. Der pH-Wert der orangegefärbten Suspension betrug 2,8. Nach Erhöhen der Temperatur auf 35 °C wurde unter weiterer Lufteinleitung (2700 $Nm^3$/h) pH-geregelt bei pH 5,15 ± 0,15 innerhalb von 270 Minuten 5,4 $m^3$ 14,9 %ige NaOH zugeführt. Am Ende der Wachstumsphase wurden der Reaktionsmischung 11,4 kg $SnCl_2$ 2 $H_2O$, gelöst in Wasser zugesetzt und der pH auf 8,0 eingestellt. Anschließend wurde die Suspension unter Rühren 2 h umgepumpt.

Eine Hälfte der Suspension wurde mit 30 l Olivenöl versetzt, auf 50°C aufgeheizt und weitere 2 h gerührt. Danach wurde die Suspension auf einer Filterpresse filtriert und der Feststoff mit Wasser bis zu einem pH von 7 gewaschen. Die Trocknung des Produktes erfolgte bei 160°C an Luft in einem Bandtrockner.

Das erhaltene $\gamma$-FeOOH wurde unter Zersetzung der organischen Verbindung durch Tempern im Stickstoffstrom bei 450°C während 90 min zu $FeO_x$ vorreduziert und anschließend im Wirbelbettreaktor bei 330 bis 350°C während 28 h mit Wasserstoff zum Metall reduziert. Daran anschließend erfolgte eine Passivierung der pyrophoren Metallteilchen im $N_2$/Luft-Gemisch. Die Meßergebnisse sind in der Tabelle 1 angegeben.

## Beispiel 9

Es wurde wie in Beispiel 3 verfahren mit dem Unterschied, daß die formstabilisierende Ausrüstung nach Abschluß der Wachstumsphase in der Mutterlauge mit 1 Gew.% Nickel und 1,5 Gew.% $SiO_2$, vorgenommen wurde.

Das erhaltene $\gamma$-FeOOH wurde im Stickstoffstrom bei 700°C und einer Verweilzeit von 90 Minuten zu nickeldotiertem $\alpha$-$Fe_2O_3$ getempert und anschließend im kontinuierlichen Drehrohrofen bei 400°C und einer Verweilzeit von 7 h mit 3,5 $Nm^3$/h Wasserstoff, der im Gegenstrom zum Feststoff geführt wurde, zum Metall reduziert. Das erhaltene Metallpulver wurde schließlich mit einem Luft/Stickstoff-Gemisch passiviert. Die Meßergebnisse sind in Tabelle 1 angegeben.

## Vergleichsversuch 1

In einem Kessel mit 51 $m^3$ Nutzvolumen, versehen mit Rührer, Temperatur-und pH-Regelung und Lufteinleitung wurden 24 $m^3$ Wasser vorgelegt. Anschließend wurden 6,95 $m^3$ einer 30,5 %igen technischen $FeCl_2$-Lösung hinzugefügt und die Lösung auf 21°C thermostatisiert. Durch Zugabe von 5,40 $m^3$ 15,0 %iger NaOH erfolgte die Fällung von 50 % der Fe(II)-Ionen als $Fe(OH)_2$. Bei 22 bis 24°C wurden anschließend 3000 $m^3$ Luft je Stunde durch die Suspension geleitet, worauf nach 220 Minuten die Keimbildungsphase abgeschlossen war. Bei sonst gleichbleibenden Bedingungen wurde die Suspension nun auf 33 bis 34°C aufgeheizt und unter pH-gesteuerter Zudosierung von 5,24 $m^3$ 15,0 %iger NaOH bei einem pH von 4,9 ± 0,2 innerhalb von 275 Minuten der Wachstumsprozeß durchgeführt. Nach Ende der Aufwachsphase wurde die Suspension auf pH 5,5 gestellt, über Membranfilterpressen filtriert und chloridfrei gewaschen. Das Produkt wurde im Bandtrockner bei 170°C an Luft getrocknet. Das erhaltene $\gamma$-FeOOH wurde während 60 Minuten bei 450°C und einem Stickstoffstrom von 15 $Nm^3$/h entwässert und anschließend zwischen 320 und 340°C während 17 h im Wasserstoffstrom zum Metall reduziert. Daran anschließend erfolgte eine Passivierung der Metallteilchen im Stickstoff/Luft-Gemisch.

Die Meßergebnisse sind in Tabelle 1 angegeben.

## Vergleichsversuch 2

Es wurde wie in Beispiel 8 beschrieben verfahren, jedoch mit dem Unterschied, daß auch der Aufwachsprozeß bei 20°C durchgeführt wurde, und der pH-Wert während des Aufwachsprozesses zwischen 3,6 und 3,8 gehalten wurde. Das Produkt wurde im Bandtrockner bei 170°C an Luft getrocknet. Nach formstabilisierender Ausrüstung des erhaltenen $\gamma$-FeOOH's mit 1 Gew.% $SiO_2$ erfolgte die Umwandlung zum Metallpigment durch Reduktion im Wasserstoffstrom bei 350°C während 38 h. Daran anschließend wurde das Produkt mit einem Stickstoff/Luft-Gemisch passiviert.

Die Meßergebnisse sind in Tabelle 1 angegeben.

## Vergleichsversuch 3

Es wurde wie in Beispiel 1 beschrieben verfahren, jedoch mit dem Unterschied, daß die Keimbildungsphase in Gegenwart von 12,8 g $NaH_2PO_4 \cdot 2 H_2O$ (= 2,0 % $PO_4^{3-}$ bezogen auf die theoretische Ausbeute $\gamma$-FeOOH) durchgeführt wurde. Die Umwandlung zum Metallpigment erfolgte durch Temperung im Drehkol-

ben unter Stickstoff zu $Fe_2O_3$ und anschließende Reduktion im diskontinuierlichen Drehrohr mit Wasserstoff bei 380 °C. Die Meßergebnisse sind in Tabelle 1 angegeben.

<u>Tabelle 1</u>

| | γ-FeOOH | | | Metallpulver | | |
|---|---|---|---|---|---|---|
| | $S_{N_2}$ [m²/g] | $PO_4^{3-}$ [%] | Ausrüstung % | $S_{N_2}$ [m²/g] | $H_C$ [kA/m] | $M_r$ [nTm³/g] |
| Beispiel 1 | 49,7 | 0,75 | 0,97 Si | 38,2 | 72,3 | 72,6 |
| Beispiel 2 | 74,3 | 1,0 | 1,30 Si | 43,9 | 69,9 | 72,3 |
| Beispiel 3 | 52,2 | 0,75 | 0,98 Si | 35,0 | 72,7 | 76,1 |
| Beispiel 4 | 49,6 | 0,75 | 0,96 Si | 47,0 | 78,2 | 78,0 |
| Beispiel 5 | 84,9 | 1,0 | 1,35 Si | 48,3 | 60,8 | 78,5 |
| | | | 1,60 C | | | |
| | | | 2,75 Ni | | | |
| Beispiel 6 | 60,8 | 0,75 | 1,60 Sn | 33,2 | 70,6 | 82,0 |
| | | | 1,60 C | | | |
| Beispiel 7 | 60,8 | 1,0 | 0,85 Sn | 35,1 | 63,6 | 71,9 |
| | | | 1,90 C | | | |
| Beispiel 8 | 36,9 | 0,5 | 0,27 Sn | 17,8 | 64,8 | 93,0 |
| Beispiel 9 | 49,9 | 0,75 | 0,97 Ni | 36,6 | 72,5 | 83,8 |
| | | | 0,97 Si | | | |
| Vergleichsversuch 1 | 32,0 | 0,0 | keine | 22,1 | 70,2 | 100,0 |
| Vergleichsversuch 2 | 51,9 | 0,0 | 1,00 Si | 27,7 | 69,9 | 70,0 |
| Vergleichsversuch 3 | 146,3 | 2,0 | 1,50 Si | 57,6 | 75,8 | 103,0 |

Beispiele B1-B8

640 Teile einer 12,5 %igen Lösung eines thermoplastischen Polyesterurethans aus Adipinsäure, Butandiol-1,4 und 4,4'-Diisocyanatodiphenylmethan in einem Gemisch aus gleichen Teilen Tetrahydrofuran und Dioxan sowie 100 Teilen einer 20 %igen Lösung eines Phenoxyharzes aus Bisphenol A und Epichlorhydrin im gleichen Lösungsmittelgemisch werden m it 810 Teilen jeweils eines Metallpulvers der in der Tabelle 2 angegebenen Beispiele und den Vergleichsversuchen 1 und 2, 2,25 Teilen Natriumoleat, 27 Teilen Aluminiumoxid, 90 Teilen eines Chromdioxids mit einer Koerzitivfeldstärke von 50 kA/m, 14 Teilen eines Vinylpyrrolidon-Vinylacetat-Copolymeren mit einem Molekulargewicht von 10 000 und weiteren 600 Teilen des genannten Lösungsmittelsgemisches in einer 6000 Volumenteile fassenden und mit 8000 Teilen Stahlkugeln eines Durchmessers von 4 bis 6 mm gefüllten Kugelmühle 4 Tage lang dispergiert. Anschließend werden nochmals 640 Teile der genannten Polyesteruethanlösung und 100 Teile der Phenoxyharzlösung sowie 18 Teile Butylstearat, 4,5 Teile Stearinsäure und 400 Teile der Phenoxyharzlösung zugegeben und nochmals 24 Stunden dispergiert. Die erhaltene Dispersion wird unter Druck durch einen Filter mit 5 $\mu$m Poren filtriert und auf eine 14,5 $\mu$m dicke Polyethylenterephthalatfolie mittels eines üblichen Linealgießers aufgetragen.

Die beschichtete Folie wird nach Durchlaufen eines Magnetfeldes zur Ausrichtung der magnetischen Teilchen bei Temperaturen zwischen 60 und 80° C getrocknet. Nach der Trocknung wird die Magnetschicht der beschichteten Folie durch zweimaliges Hindurchführen zwischen beheizten Walzen (90° C) unter einem Liniendruck von 35 kg/cm verdichtet und geglättet. Die Dicke der Magnetschicht beträgt dann 4 $\mu$m. Nach dem Schneiden der beschichteten Folie in 1/2 Zoll breite Videobänder werden diese auf dem Schleifenlaufwerk geprüft.

## Tabelle 2

| Beispiel | B1 | B2 | B3 | B4 | B5 | B6 | B7 | B8 |
|---|---|---|---|---|---|---|---|---|
| magnet. Material Bsp. | 2 | 3 | 4 | 7 | 8 | 9 | V1 | V2 |
| HF-S/N [dB] | + 1,5 | + 3,5 | + 3,5 | + 2,0 | + 2,5 | + 1,5 | + 0,5 | ± 0 |
| CR-S/N [dB] | + 4,0 | + 3,5 | + 3,5 | + 5,0 | + 5,0 | + 3,5 | + 3,5 | + 2,0 |

## Ansprüche

1. Verfahren zur Herstellung von nadelförmigem, im wesentlichen aus Eisen bestehenden ferromagnetischen Metallteilchen durch Reduktion von einem durch Entwässern aus nadelförmigem, mit einem formstabilisierenden Oberflächenüberzug versehenen Eisen(III)oxidhydroxid erhaltenen $\alpha$-Eisen(III)oxid, dadurch gekennzeichnet , daß nach dem sauren Verfahren in einer ersten Stufe aus Eisen(II)-salzlösungen durch Zugabe von Alkalien unter gleichzeitiger Oxidation mittels Einleiten von Luft $\gamma$-FeOOH-Keime in Gegenwart von, bezogen auf die Menge an $\gamma$-FeOOH-Endprodukts, 0,5 bis 1,5 Gew.% Phosphationen erzeugt werden, diese Keime dann in einer zweiten Stufe bei einem pH-Wert der Reaktionssuspension zwischen 4,0 und 5,5 zum $\gamma$-FeOOH-Endprodukt weiterwachsen und anschließend die $\gamma$-FeOOH-Teilchen in der Reaktionssuspension mit einer aus Siliciumdioxid und/oder Zinnoxide bestehenden Oberflächenausrüstung versehen werden, um nach dem Abtrennen bei Temperaturen zwischen 350 und 600° C zum $\alpha$-Eisen(III)oxid entwässert und getempert und in einer reduzierenden Atmosphäre bei einer Temperatur zwischen 300 und 450° C zum Metall reduziert zu werden.

2. Verfahren gemäß Anspruch 1, dadurch gekennzeichnet , daß das oberflächlich ausgerüstete $\alpha$-Eisen-(III)oxid mittels zersetzlicher organischer Verbindungen zunächst zu FeO$_x$ mit Werten für x zwischen größer/gleich 1,33 und kleiner/gleich 1,40 bei Temperaturen zwischen 270 und 650° C unter Inertgasatmosphäre vorreduziert und dann anschließend mittels eines reduzierenden Gases, wie z.B. Wasserstoff und/oder Kohlenmonoxid, in die Metallform überführt wird.

9

## Claims

1. A process for preparing an acicular ferromagnetic metal particle consisting essentially of iron by reducing an ∝-iron(III) oxide obtained by dehydrating an acicular iron(III) oxide hydroxide having a shape-stabilizing surface coating, which comprises using the acid process to produce in a first stage a γ-FeOOH nucleus from an iron(II) salt solution in the presence of, based on the amount of γ-FeOOH end product, from 0.5 to 1.5% by weight of a phosphate ion by adding an alkali with simultaneous oxidation through the introduction of air, then in a second stage permitting this nucleus to grow at a reaction suspension of 4.0 - 5.5 into the γ-FeOOH end product and subsequently providing the γ-FeOOH particle in the reaction suspension with a silicon dioxide or tin oxide surface coating, dehydrating and heating, after isolation, at 350-600°C to give ∝-iron(III) oxide and reducing at 300-450°C in a reducing atmosphere to the metal.

2. A process as claimed in claim 1, wherein the ∝-iron(III) oxide with the surface coating is first prereduced to $FeO_x$, x being greater than or equal to 1.33 and smaller than or equal to 1.40, at 270-650°C in an inert gas atmosphere by means of a decomposable organic compound and is subsequently converted by means of a reducing gas, for example hydrogen or carbon monoxide, into the metal form.

## Revendications

1. Procédé de préparation de particules métalliques ferromagnétiques aciculaires consistant essentiellement en fer par réduction d'un oxyde de fer-III alpha obtenu lui-même par déshydratation d'un oxyde basique de ferIII aciculaire portant un revêtement superficiel qui stabilise la forme, caractérisé en ce que, selon le procédé acide, dans un premier stade opératoire, on produit à partir de solutions de sels de fer-II, par addition d'alcalis et oxydation simultanée par injection d'air, des germes de gamma-FeOOH en présence de 0,5 à 1,5 % en poids, par rapport à la quantité du gamma-FeOOH obtenu en produit final, d'ions phosphates, dans un deuxième stade opératoire, on fait croître ces germes à un pH de la suspension de réaction allant de 4,0 à 5,5 en le gamma-FeOOH finalement recherché puis on applique sur les particules de gamma-FeOOH, dans la suspension de réaction, un revêtement superficiel consistant en silice et/ou oxydes d'étain, on déshudrate et on calcine après séparation en l'oxyde de fer-III alpha à des températures de 350 à 600 degrés C et on réduit en métal en atmosphère réductrice à une température de 300 à 450 degrés C.

2. Procédé selon la revendication 1, caractérisé en ce que l'oxyde de fer-III alpha portant le revêtement superficiel est d'abord soumis à réduction préalable, à l'aide de composés organiques décomposables, en $FeO_x$, x ayant des valeurs supérieures ou égales à 1,33 et inférieures ou égales à 1,40, à des températures de 270 à 650 degrés C en atmosphère de gaz inerte, puis on fait passer à l'état métallique à l'aide d'un gaz réducteur tel que l'hydrogène et/ou l'oxyde de carbone.